# EUROPÄISCHE PATENTSCHRIFT

(11) **EP 2 393 948 B1**
(45) Veröffentlichungstag und Bekanntmachung des Hinweises auf die Patenterteilung: **01.05.2013**
(21) Anmeldenummer: 10714562.5
(22) Anmeldetag: 09.02.2010
(51) Int. Cl.: C22C 1/00, C22C 24/00, B01J 23/02, B01J 23/04, B01J 35/00, B01J 37/02, B01J 21/06

(54) **VERFAHREN ZUR HERSTELLUNG VON ALKALI- UND ERDALKALILEGIERUNGEN UND VERWENDUNG DER ALKALI- UND ERDALKALILEGIERUNGEN**
METHOD OF PRODUCTION OF ALKALI AND ALKALINE EARTH ALLOYS AND USE OF THE ALKALI AND ALKALINE EARTH ALLOYS
PROCEDE DE PRODUCTION D'ALLIAGES ALCALINS ET ALCALINO-TERREUX ET UTILISATION DE CES ALLIAGES ALCALINS ET ALCALINO-TERREUX

(30) Priorität: 09.02.2009 DE 102009008144
(43) Veröffentlichungstag der Anmeldung: 14.12.2011
(73) Patentinhaber: NANO-X GmbH, 66130 Saarbrücken (DE)
(72) Erfinder: SEPEUR, Stefan, 66787 Wadgassen (DE); FRENZER, Gerald, 66130 Saarbrücken (DE); HÜFNER, Stefan, 66121 Saarbrücken (DE); MÜLLER, Frank, 66125 Saarbrücken (DE)
(74) Vertreter: Vièl, Christof
(86) Internationale Anmeldenummer: PCT/DE2010/075013
(87) Internationale Veröffentlichungsnummer: WO 2010/088902

(56) Entgegenhaltungen:
- WO-A1-89/04716
- WO-A1-2008/122266
- WO-A2-02/50191
- DE-A1-102005 027 789
- DE-A1-102007 016 946
- VORLOW, S. ET AL: "The catalytic activity and selectivity of supported vanadia catalysts doped with alkali metal sulfates. I. Structural re-organizations during pre-treatment and use" APPLIED CATALYSIS , 17(1), 87-101 CODEN: APCADI; ISSN: 0166-9834, 1985, XP002592568
- REDDY ET AL: "Influence of alkaline earth metal on acid-base characteristics of V2O5/MO-TiO2 (M=Ca, Sr and Ba) catalysts" JOURNAL OF MOLECULAR CATALYSIS. A, CHEMICAL, ELSEVIER, AMSTERDAM, NL LNKD- DOI:10.1016/J.MOLCATA.2007.07.018, Bd. 276, Nr. 1-2, 14. September 2007 (2007-09-14), Seiten 197-204, XP022248081 ISSN: 1381-1169
- ZHAO ET AL: "Effect of alkaline earth metals on catalytic performance of HY zeolite for alkylation of alpha-methylnaphthalene with long-chain olefins" MICROPOROUS AND MESOPOROUS MATERIALS, ELSEVIER SCIENCE PUBLISHING, NEW YORK, US LNKD- DOI:10.1016/J.MICROMESO.2006.03.028, Bd. 94, Nr. 1-3, 8. September 2006 (2006-09-08), Seiten 105-112, XP005601295 ISSN: 1387-1811

## Beschreibung

Die Erfindung betrifft ein Verfahren zur Herstellung von Alkali- und Erdalkalilegierungen. Sie betrifft auch die Verwendung der Alkali- und Erdalkaliverbindungen.

Die WO 2007/095276 A1 beschreibt ein Verfahren zur Entfernung von Alkyl- oder Arylsulfonylschutzgruppen von einem primären oder sekundären Amin, wobei ein Alkyl- oder Arylsulfonamid vorzugsweise mit Na, K₂Na oder KNa₂ in Gegenwart einer Protonenquelle und bei Bedingungen, die für das Bilden des entsprechenden Amins ausreichend sind, kontaktiert wird.

Die WO 2008/031101 A2 betrifft Verbindungen aus Lithiummetall und porösen Oxiden (auch als "Group I metal/porous oxide composition" bezeichnet), die durch Mischen von flüssigem Lithiummetall mit einem porösen Metalloxid in inerter Atmosphäre unter ausreichend exothermen Bedingungen hergestellt werden, um das flüssige Lithiummetall in den Poren des porösen Metalloxids zu absorbieren. Angewendet werden diese Verbindungen in organischen Reaktionen, z.B. der Wurtz-Synthese.

Verbindungen aus Alkalimetallen oder Alkalimetalllegierungen und Silikagel werden in der US 2005/0151278 A1 beschrieben. Diese Verbindungen werden zur Geruchsbeseitigung eingesetzt.

Die WO 2006/036697 A2 beschreibt Verbindungen umfassend poröses Metalloxid in Form von Titanoxid oder Aluminiumoxid und ein Alkalimetall oder eine Alkalimetalllegierung.

Aus der WO 2008/131270 A1 ist ein Verfahren zur Herstellung von Alkalimetallphosphiden durch Reduktion von trisubstituierten Phosphinen mit Verbindungen bekannt, bei denen ein Alkalimetall oder eine Alkalimetalllegierung in porösen Oxidverbindungen absorbiert ist. Aus Vorlow, S. et al.: "The Catalytic Activity and Selectivity of Supported Vanadia Catalysts Doped with Alkali Metal Sulphates", I. Structural re-organizations during pre-treatment and use, Applied Catalysis, 17(1), 87-101, CODEN: APCADI; ISSN: 0166-9834, 1985, sind Vanadium-Pentoxid-basierte Katalysatoren bekannt.

In Reddy et al.: "Influence of alkaline earth metal on acid-base characteristics of V2O5f/MO-TiO2 (M = CA, Sr and Ba) catalysts, Journal of Molecular Catalysis, : Chemical 276 (2007), 197-204, ELSEVIER, Amsterdam, NL, werden Mischoxide als Oxidationskatalysatoren beschrieben.

Aufgabe der Erfindung ist es, ein neues Verfahren zur Herstellung von Alkali- und Erdalkalilegierungen zu schaffen.

Diese Aufgabe wird erfindungsgemäß dadurch gelöst, daß
● Salze, Hydroxide, Alkoxide oder Oxide von Alkali- oder Erdalkaliverbindungen, ausgewählt aus der Gruppe bestehend aus Alkali- bzw. Erdalkalisulfaten, -chloriden, -nitraten, -carbonaten, -formiaten, -oxalaten, -sulfiden, -sulfiten, -bromiden, -iodiden, -fluoriden, -nitriden, -nitriten, -phosphaten, -phosphiden, -phosphiten und -acetaten,
   mit
● Salzen, Hydroxiden, Alkoxide oder Oxiden von Halbmetallen, Nichtmetallen oder Metallen, ausgewählt aus der Gruppe bestehend aus CO₂, CO, NₐO₃, N₂O₅, NO₂, NOₓ, Siliziumoxid, Aluminiumoxid, Telluroxid, Germaniumoxid, Antimonoxid, Galliumoxid, Vanadiumoxid, Manganoxid, Chromoxid, Titanoxid, Zirkoniumoxid, Ceroxid, Lanthanoxid, Cobaltoxid, Kupferoxid, Eisenoxid, Silberoxid, Wolframoxid und Zinkoxid,
gemischt und anschließend auf mindestens 400°C erhitzt werden, wobei die Salze, Hydroxide, Alkoxide oder Oxide von Alkali- oder Erdalkalimetallen im Molverhältnis 1:1 oder im Überschuß zu den Salzen, Hydroxiden, Alkoxiden oder Oxiden der Halbmetalle, Nichtmetalle oder Metalle vorliegen.

Es hat sich im Rahmen der Erfindung überraschend gezeigt, daß durch Mischen von Salzen, Hydroxiden, Alkoxiden oder Oxiden von Alkali- oder Erdalkaliverbindungen mit Salzen, Hydroxiden. Alkoxiden oder Oxiden von Halbmetallen. Nichtmetallen oder Metallen und anschließendes Erhitzen Alkali- bzw. Erdalkalilegierungen hergestellt werden können.

Die Salze. Hydroxide, Alkoxide von Alkali- und Erdalkaliverbindungen werden bevorzugt ausgewählt aus der Gruppe bestehend aus Lithiumnitrat. Lithiumformiat, Lithiumcarbonat. Lithiumoxalat, Lithiumoxid, Lithiumhydroxid, Lithiumalkoxid, Lithiumfluorid, Lithiumchlorid, Lithiumbromid, Lithiumiodid, Lithiumsulfat, Lithiumsulfit, Lithiumsulfonat, Lithiumnitrit, Lithiumphosphit, Lithiumphosphat, Lithiumacetat, Natriumnitrat, Natriumformiat, Natriumcarbonat, Natriumoxalat, Natriumoxid, Natriumhydroxid, Natriumalkoxid, Natriumfluorid, Natriumchlorid, Natriumbromid, Natriumiodid, Natriumsulfat, Natriumsulfit, Natriumsulfonat, Natriumnitrit, Natriumphosphit, Natriumphosphat, Natriumacetat Kaliumnitrat, Kaliumformiat, Kaliumcarbonat, Kaliumoxalat, Kaliumoxid, Kaliumhydroxid, Kaliumalkoxid, Kaliumfluorid, Kaliumchlorid, Kaliumbromid, Kaliumiodid, Kaliumsulfat, Kaliumsulfit, Kaliumsulfonat, Kaliumnitrit, Kaliumphosphit, Kaliumphosphat, Kaliumacetat, Rubidiumnitrat, Rubidiumformiat. Rubidiumcarbonat. Rubidiumoxalat, Rubidiumoxid, Rubidiumhydroxid. Rubidiumalkoxid, Rubidiumfluorid. Rubidiumchlorid. Ruhidiumbromid, Rubidiumiodid, Rubidiumsulfat, Rubidiumsulfit, Rubidiumsulfonat, Rubidiumnitrit, Ruhidiumphosphit, Rubidiumphosphat. Rubidiumacetat, Caesiumnitrat, Caesiumformiat, Caesiumcarbonat. Caesiumoxalat, Caesiumoxid, Caesiumhydroxid, Caesiumalkoxid, Caesiumfluorid, Caesiumchlorid, Caesiumbromid, Caesiumiodid, Caesiumsulfat, Caesiumsulfit, Caesiumsulfonat, Caesiumnitrit, Caesiumphosphit, Caesiumphosphat, Caesiumacetat. Magnesiumnitrat, Magnesiumformiat, Magnesiumcarbonat, Magnesiumoxalat, Magnesiumoxid, Magnesiumhydroxid, Magnesiumalkoxid, Magnesiumfluorid, Magnesiumchlorid, Magnesiumbromid, Magnesiumiodid, Magnesiumsulfat, Magnesiumsulfit, Magnesiumsulfonat, Magnesiumnitrit, Magnesiumphosphit, Magnesiumphosphat, Magnesiumacetat, Calciumnitrat, Calciumformiat, Calciumcarbonat, Calciumoxalat, Calciumoxid, Calciumhydroxid, Calciumalkoxid, Calciumfluorid, Calciumchlorid, Calciumbromid, Calciumiodid, Calciumsulfat, Calciumsulfit, Calciumsulfonat, Calciumnitrit, Calciumphosphit, Calciumphosphat, Calciumacetat, Strontiumnitrat, Strontiumformiat, Strontiumcarbonat, Strontiumoxalat, Strontiumoxid, Strontiumhydroxid, Strontiumalkoxid, Strontiumfluorid, Strontiumchlorid, Strontiumbromid, Strontiumiodid, Strontiumsulfat. Strontiumsulfit, Strontiumsulfonat, Strontiumnitrit, Strontiumphosphit, Strontiumphosphat, Strontiumacetat, Bariumnitrat, Bariumformiat, Bariumcarbonat, Bariumoxalat, Bariumoxid, Bariumhydroxid, Bariumalkoxid, Bariumfluorid, Bariumchlorid, Bariumbromid, Bariumiodid, Bariumsulfat, Bariumsulfit, Bariumsulfonat, Bariumnitrit, Bariumphosphit, Bariumphosphat und Bariumacetat.

Es ist zur Erfindung gehörig, daß die Salze, Hydroxide. Alkoxide oder Oxide von Alkali- oder Erdalkaliverbindungen mit den Oxiden von Halbmetallen, Nichtmetallen oder Metallen in der Schmelze, in der Gasphase unter erhöhtem Druck oder als flüssiges Beschichtungsmaterial in einem Lösungsmittel, vorzugsweise in Wasser gemischt werden.

Die zur Herstellung von Alkali- oder Erdalkalilegierungen verwendeten Einsatzstoffe (Salze, Hydroxide, Alkoxide oder Oxide von Alkali- oder Erdalkaliverbindungen sowie Oxide von Halbmetallen, Nichtmetallen oder Metallen) können mit einem Lösungsmittel, insbesondere mit Wasser, auf einen Feststoffgehalt zwischen 0.05 Gew.-% und 60 Gew.-%, vorzugsweise zwischen 2 und 20 Gew.-% verdünnt sein, so daß ein flüssiges Beschichtungsmaterial vorliegt.

Die zur Herstellung von Alkali- und Erdalkalilegierungen verwendeten Einsatzstoffe können als Beschichtungsmaterial im verdünnten oder unverdünnten Zustand auf ein Substrat aufgetragen werden, wonach die Trocknung erfolgt. In diesem Zusammenhang ist es vorteilhaft, daß das Herstellung von Alkali- und Erdalkalilegierungen verwendete Beschichtungsmaterial naßchemisch auf das Substrat appliziert wird, insbesondere durch Sprühen, Gießen, Fluten, Tauchen, Aufreiben, Schleudern. Walzen oder Drucken. Hierbei ist es zweckmäßig, daß das Herstellung von Alkali- und Erdalkalilegierungen verwendete Beschichtungsmaterial mit einer Schichtdicke von 10 nm bis 100 µm, insbesondere von 0.5 bis 20 µm, appliziert wird.

Ebenso ist es möglich, daß die zur Herstellung von Alkali- und Erdalkalilegierungen verwendeten Einsatzstoffe als Additiv in anderen Beschichtungsmaterialien, insbesondere Keramikschlickem, Nanosuspensionen, Glasfritten, Polymeren oder Sol-Gel-Systemen enthalten sind.

Weiterhin ist es erfindungsgemäß, daß mindestens eines der Salze von Alkali- oder Erdalkalimetallen bzw. von Halbmetallen, Nichtmetallen oder Metallen als Oxid vorliegt, besonders bevorzugt die Halbmetalle, Nichtmetalle oder Metalle als Oxide vorliegen.

Im Rahmen der Erfindung ist auch vorgesehen, daß das Erhitzen bis zur Schmelztemperatur des höchstschmelzenden Bestandteiles erfolgt. Eine bevorzugte Ausführungsform der Erfindung besteht darin, daß das Erhitzen bis 1.000°C. insbesondere zwischen 400°C und 600°C. während 1 Sekunde bis mehreren Stunden, insbesondere während mindestens 1 Minute, bevorzugt während mindestens 1 Stunde und besonders bevorzugt während mindestens 24 Stunden erfolgt.

Es ist auch erfindungsgemäß vorgesehen, daß das Erhitzen in sauerstoffarmer, bevorzugt in sauerstofffreier Atmosphäre erfolgt. Hierbei kann vorgesehen sein, daß das Erhitzen in einem Umluftofen oder unter IR-Strahlung erfolgt.

Es ist zur Erfindung gehörig, daß die Herstellung der Alkali- oder Erdalkalilegierungen nach dem Sol-Gel-Verfahren oder über Fällungsreaktionen, direkt aus den Elementen durch Schmelzverfahren, insbesondere Festkörperreaktionen, durch Flammenpyrolyse oder Gasphasenseparation, insbesondere CVD oder PVD, durch Sprühtrocknung oder Gefriertrocknung erfolgt.

In einer ersten Ausführungsform werden die nach dem erfindungemäßen Verfahren hergestellten Alkali- oder Erdalkalilegierungen zur Herstellung einer abriebfesten Beschichtung verwendet, wobei das zur Herstellung von Alkali- und Erdalkalilegierungen verwendete Beschichtungsmaterial nasschemisch durch Sprühen, Gießen, Fluten, Tauchen, Aufreiben, Schleudern, Walzen oder Drucken abschnittsweise auf ein Substrat oder auf das gesamte Substrat appliziert und erhitzt wird.

Die katalytische Aktivität der Beschichtung wird auch bei sichtbarer Beschädigung durch Abrieb (Kratzer) nicht beeinflusst. Die katalytische Aktivität fördert insbesondere die Verbrennung von organischen Substanzen und Ruß, insbesondere Kerzenruß, Dieselruß, Modellruß und flüchtigen Verbrennungsprodukten von Holz, Erdgas, Erdöl und Benzin.

In einer anderen Ausführungsvariante werden die Salze der Alkali- und Erdalkalilegierungen auf einem keramischen Festkörper, bestehend aus Salzen der Metalle, Halbmetalle oder Nichtmetalle, aufgetragen und durch eine Temperaturbehandlung bei Temperaturen von mehr als 200°C finden Diffusionsprozesse statt, bei denen die Alkali- und Erdalkalilegierungen in den keramischen Formkörper eindiffundieren und sich Oberflächengradienten ausbilden, bei denen die Salze, Hydroxide, Alkoxide oder Oxide von Alkali- oder Erdalkalimetallen im Molverhältnis 1:1 oder im Überschuß zu den Salzen, Hydroxiden, Alkoxiden oder Oxiden der Halbmetalle, Nichtmetalle oder Metalle vorliegen.

Eine weitere Ausführungsvariante der Erfindung besteht darin, daß das Substrat ein keramischer hochporöser Träger ist, auf den eine erste Beschichtung aufgebracht ist, deren thermische Leitfähigkeit größer ist als die des Trägers. Hierbei ist es sinnvoll, daß der Träger eine thermische Leitfähigkeit von weniger als 10 Wm⁻¹K⁻¹ aufweist. Bei dieser weiteren Ausführungsvariante ist es vorteilhaft, daß die erste auf den Träger aufgebrachte Beschichtung eine Wärmeleitfähigkeit von mindestens 10 Wm⁻¹K⁻¹, bevorzugt von mindestens 30 Wm⁻¹K⁻¹ und besonders bevorzugt von mindestens 50 Wm⁻¹K⁻¹ aufweist.

Es kann auch vorgesehen sein, daß auf einem keramischen hochporösen Träger eine katalytisch aktive Beschichtung aufgebracht ist, deren thermische Leitfähigkeit größer ist als die des Trägers.

Weiterhin liegt es im Rahmen der Erfindung, daß die erste auf den Träger aufgebrachte Beschichtung aus metallischen Werkstoffen, insbesondere Silber, Kupfer, Gold, Aluminium, Zink, Wolfram, Nickel, Eisen, Platin, Tantal, Blei oder Titan, aus keramischen Werkstoffen mit hoher thermischer Leitfähigkeit, insbesondere Siliziumcarbid, Kohlenstoffnanoröhrchen, Aluminiumoxid, Aluminiumoxid/Zirkoniumoxid (ZTA) Siliziumnitrid, Aluminiumnitrid, Sialon, Magnesiumoxid, Berylliumoxid oder Bornitrid, oder glasartigen Werkstoffen, die mit wärmeleitfähigen Partikeln gefüllt sind oder Kombinationen dieser Werkstoffe besteht.

Zur Erfindung gehörig ist, daß das Substrat Glas, Metall, Halbmetall, Metalloxid, Kunststein, Naturstein, Beton, Putz, Keramik, Email, Glaskeramik, Kunststoff oder eine lackierte Oberfläche ist.

Mit keramischem, hochporösem Filtermaterial als Träger ergibt sich die Verwendung als Katalysator in Verbrennungsmotoren und- maschinen, insbesondere von Kraftfahrzeugen, Baumaschinen, Flugzeugen, Lokomotiven und Schiffen.

Mit Glas als Trägermaterial ergibt sich die Verwendung des Gegenstandes der Erfindung als selbstreinigende Beschichtung auf Kaminglasscheiben, Backofensichtscheiben. Industriesichtscheiben für Verbrennungsprozesse in Haushaltsöfen, Kraftwerken, Kokereien. Stahlerzeugung und als Antihaftmittel auf Glaskeramik, vorzugsweise Glaskeramikkochfelder.

Im Rahmen der Erfindung liegt die Verwendung der gemäß dem erfindungsgemäßen Verfahren hergestellten Alkali- oder Erdalkalilegierungen in Form von Partikeln, insbesondere als Additiv in Flüssigkeiten oder Lösungen, in Kraftstoffen oder in Festkörpern zur Katalyse.

Ebenso liegt die Verwendung der gemäß dem erfindungsgemäßen Verfahren hergestellten Alkali- oder Erdalkalilegierungen als Bulkmaterial, insbesondere als Leichtmetalllegierungen, im Rahmen der Erfindung. Eine besondere Anwendung dieser Leichtmetalllegierungen ist die Erhöhung der Härte von Werkstoffen.

Die gemäß dem erfindungsgemäßen Verfahren hergestellten Alkali- oder Erdalkalilegierungen können auch als Beschichtungsmaterial, vorzugsweise als Edelmetall enthaltendes Beschichtungsmaterial, insbesondere als Oxidationskatalysator, Reduktionskatalysator, Reaktionskatalysator oder als Katalysator für chemische Prozesse zum Abbau oder Umwandlung von organischen Substanzen oder Gase verwendet werden.

Die gemäß dem erfindungsgemäßen Verfahren hergestellten Alkali- oder Erdalkalilegierungen können beispielsweise zum Herstellen von Beschichtungen in Verbrennungsmotoren und- maschinen für Motorinnenräume, Kolben, Abgasanlagen und - filter, insbesondere Dieselpartikelfilter, auf Scheiben, Maschinenteilen, Rohren oder Kraftwerksteilen, insbesondere für Glas- und Stahleinsätze sowie Kaminsteine und Filtermatten, als Entschlackungshilfe in Kraftwerken, auf Backofensichtscheiben, Kochplatten, insbesondere Keramikkochfeldern als Antihaftmittel, auf einem Träger zur Entfernung flüchtiger organischer Verbindungen aus der Raumluft, insbesondere nach Anreicherung auf der Beschichtung, in Brennstoffzellen zur Entfernung von gasförmigen Verunreinigungen des Wasserstoffes, insbesondere Kohlenmonoxid, als Cokatalysator für die Energiegewinnung durch (photo-)katalytische Spaltung von Wasser in Wasserstoff und Sauerstoff verwendet werden.

Der Gegenstand der Erfindung kann in Kraftwerken oder Rohren auch genutzt werden, um Anbackungen bei erhöhten Temperaturen zu vermeiden. Auf anderen Trägern, wie z.B. Stahl oder Stein, beschichtet oder als Additiv in Beschichtungsmassen ergeben sich Anwendungen in Kraftwerksschloten, Brennkammern, Haushaltkaminrohren, als Grillbeschichtungen und Beschichtungen in Haushaltsgeräten.

Das erfindungsgemäße Material kann auch genutzt werden, um den Zündzeitpunkt von Benzin, Diesel oder Kerosin in Motorbrennräumen zu beeinflussen.

Das zur Herstellung von Alkali- und Erdalkalilegierungen verwendete Beschichtungsmaterial kann ebenso für den industriellen Einsatz als Geruchskatalysator verwendet werden.

Die Anbindung an den Träger erfolgt durch anorganische Bindemittel, zusätzlich kann die aktive Komponente als Additiv zu bereits bestehenden Beschichtungsmassen zugefügt werden (z.B. Keramikschlickern, Nanosuspensionen, Glasfritten oder Sol-Gel-Systemen). Das zur Herstellung von Alkali- und Erdalkalilegierungen verwendete erfindungsgemäße Beschichtungsmaterial kann auch einem Beschichtungssystem, wie es in der DE 10 2005 021 658 A1 beschrieben wird, zugegeben werden.

Den Erfindern ist es durch geeignete Wahl eines Binders gelungen, eine abriebfeste Beschichtung zu entwickeln. Die katalytische Aktivität der Beschichtung wird auch bei sichtbarer Beschädigung durch Abrieb (Kratzer) nicht beeinflusst. Die katalytische Verbrennungsaktivität der Beschichtung liegt im Bereich von 100 bis 550°C, bevorzugt zwischen 250 und 400°C und besonders bevorzugt zwischen 250 und 350°C. Die katalytische Aktivität fördert insbesondere die Verbrennung von organischen Substanzen und Ruß, insbesondere Kerzenruß, Dieselruß, Modellruß und flüchtigen Verbrennungsprodukten von Holz, Erdgas, Erdöl und Benzin.

Die Zündtemperatur für die Verbrennung von Russpartikeln liegt bei 100 bis 450°C, besonders bevorzugt bei 250 bis 350°C. Eine Beaufschlagung von Stickoxiden während der Verbrennung ist nicht notwendig, um diese Zündtemperaturen zu erreichen.

Das Oxidationsvermögen der Beschichtung wird im Gegensatz zu üblichen Methoden (z. B. TGA/DTA) durch visuelle Beurteilung festgestellt. Hierzu wird eine Modellrußdispersion (1-5%ig in Lösemittel) auf eine Weise auf die Beschichtung gebracht, daß eine deckende Rußschicht vorhanden ist. Alternativ kann die Beschichtung auch mit Kerzenruß beaufschlagt werden. Zur Feststellung der Zündtemperatur der Rußverbrennung wird der beschichtete Träger mit der Rußschicht versehen in einem Ofen bei verschiedenen Temperaturen ausgelagert. Bei einer Temperatur von 100 bis 500°C, insbesondere bei 250 bis 350°C, ist die Rußschicht nach einer Stunde entweder nicht mehr vorhanden oder blättert ab, vermutlich aufgrund Enthaftung durch Oxidation der unteren Rußlage. Bei längeren Auslagerungszeiten (2-5 Stunden) reduziert sich diese Verbrennungstemperatur deutlich.

Nachfolgend wird die Erfindung anhand von Ausführungsbeispielen näher erläutert.

### Beispiel 1:

94,85 g (3-Glycidoxypropyl)triethoxysilan (GPTES) und 31,55 g Kieselsäure (Levasil 200s) werden 1 Stunde lang gerührt. Nach 1 Stunde Rühren wird 240,13 g Natriumnitrat in 741,64 g 5%ige Essigsäure zugegeben, wobei sich ein pH-Wert der Lösung von etwa pH 3 einstellt. Die Lösung wird bei 120°C bis zur Gewichtskonstanz vorgehärtet, zermahlen und anschließend im Hochtemperaturofen auf 850°C unter Schutzgasatmosphäre gehärtet. Man erhält ein grauschwarzes Pulver.

### Beispiele 2:

5,00 g Aluminiumoxid C (mittlere Primärteilchengröße 13 nm) werden in 95,0 g 5%iger Essigsäure mit einem Ultra-Turrax für 10 min bei 15000 U/min dispergiert. Ein TEOS-Hydrolysat (hergestellt durch Rühren von 27,72 g TEOS und 10 g 0,01M Salzsäure bis zu einer klaren Lösung) wird unter Rühren zugegeben. Nach 1 Stunde Rühren werden 17,9 g Kaliumformiat zugegeben. Der pH-Wert der Lösung wird mit 10%iger Essigsäure auf pH 3 eingestellt. Die Beschichtungslösung wird au einem metallischen Träger aufgebracht und analog Beispiel 1 durch Temperaturbehandlung unter Schutzgasatmosphäre gehärtet.

### Beispiel 3:

Zu 117,4 g (3-Glycidoxypropyl)triethoxysilan (GPTES) und 61,7 g Tetraethoxysilan wird portionsweise 58,75 g Calziumhydroxid zugegeben, so dass die Temperatur 50°C nicht übersteigt. Nach Rühren über Nacht werden 558,7 g Isopropanol zugegeben und 40,24 g Wasser portionsweise zugetropft. Nach Rühren über Nacht ist die Lösung beschichtungsfertig. Die Applikation erfolgt auf Glas oder Stahl durch Auffluten und anschließender thermischer Nachbehandlung für 1 h bei 500°C (2°C/min Aufheizzeit). Man erhält eine transparente, katalytisch aktive Beschichtung, welche Russ bei Temperaturen zwischen 250 und 400°C verbrennt.

Zur Beurteilung des Rußabbaus wird auf die Beschichtung eine Rußdispersion eines Modellrußes durch Fluten aufgetragen. Alternativ kann die Beschichtung auch mit Kerzenruß beaufschlagt werden. Zur Herstellung der Rußdispersion werden 1,8 g. Degussa Printex U in 60 g Isopropanol gegeben und mit einem Ultra-Turrax für 1 min bei 15000 U/min dispergiert. Die Substrate werden für ca. 1 h thermisch ausgelagert. Vollständiger Rußabbau erfolgt auf Glas bei Temperaturen von 100 bis 500°C, bevorzugt bei 250 bis 430°C. Auf Stahl erfolgt der Rußabbau bei Temperaturen von 100 bis 450°C, bevorzugt 250 bis 400°C.

### Beispiel 4:

Zu 22,4 g (3-Glycidoxypropyl)triethoxysilan (GPTES) und 24,0 g Kieselsol (Levasil 200s) werden 1028 g Wasser und 133,6 g Strontiumnitrat gegeben. Nach Einrühren des Kaliumsalzes werden 40,0 g TiO2 (Degussa P25) zugegeben und mit einem Ultraturrax 30 min bei 15.000 U/min dispergiert. Die Dispersion kann direkt appliziert werden.

Die Lösungen aus Beispiel 3 und 4 werden durch Tauchen auf einen Keramik-Wabenstrukturkörper, bestehend aus Siliziumcarbid, Aluminiumtitanat oder Cordierit, aufgebracht und eine Stunde bei 500°C (2°C/min Aufheizrate) thermisch gehärtet. Eine Vorhärtung kann bei niedrigeren Temperaturen erfolgen.

### Beispiel 5:

Zu 17,02 g Tetraethoxysilan (Dynasilan A) werden 8,17 g 10%ige Essigsäure gegeben und etwa 1 Stunde gerührt, bis eine klare Lösung entstanden ist. Zu dieser Lösung werden 33,07 g Kaliumnitrat, (Fluka, purum) in deionisiertem Wasser unter Rühren zugesetzt. Die Lösung ist beschichtungsfertig zur Tauchbeschichtung von keramischen Substraten. Zur Verbesserung der Benetzung bei Beschichtung von Stahl, Edelstahl oder Glas können 0,20 g eines Verlaufsmittels zugesetzt werden.

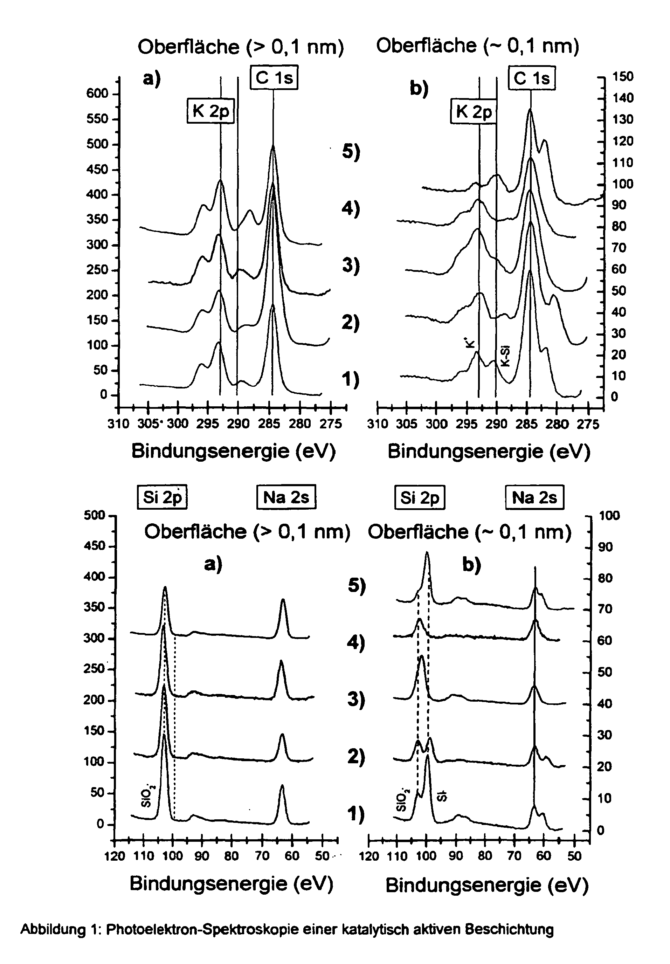

Die Abbildung 1 zeigt eine Photoelektron-Spektroskopie einer katalytisch aktiven Beschichtung.

Durch Photoelektronenspektroskopie-Messungen (XPS) kann das Vorliegen neuartiger Alkali-Silizium-Verbindungen detektiert werden. Abbildung 1 zeigt das Ergebnis der Untersuchungen an einer Beschichtung, welche Silizium und Kalium als Komponenten enthält. Es zeigt sich, daß sich nur an der äußersten Atomlage (Kurven b) eine metallische Kalium-Silizium Legierung bildet, welche für die katalytische Rußoxidation verantwortlich ist. Hier bilden sich sowohl am Si 2p- als auch am K 2p-Signal erkennbar Strukturen (Kurven 1) mit verringerter Bindungsenergie, welche sowohl metallischen Silizium als auch metallischem Kalium zuzuordnen sind. Die Vermutung liegt hier nahe, daß es sich um eine reversible Legierungsbildung handelt. Nach mehrfacher Rußverbrennung (Aufbringen einer Rußbeladung und nachfolgender thermischer Verbrennung, Kurven 2: 1x, Kurven 3: 3x, Kurven 4: 10x) bei niedriger Temperatur (300°C) verschwinden die der Legierung zugeordneten Signale langsam und bilden sich nach einer thermischen Regenerierung bei 500°C wieder (Kurven 5). Im tieferen Atomlagen (Kurven a) ist dieser Effekt nicht zu erkennen.

## Patentansprüche

1. Verfahren zur Herstellung von Alkali- oder Erdalkalilegierungen, **dadurch gekennzeichnet, daß**
● Salze, Hydroxide, Alkoxide oder Oxide von Alkali- oder Erdalkaliverbindungen, ausgewählt aus der Gruppe bestehend aus Alkali- bzw. Erdalkalisulfaten, -chloriden, -nitraten, -carbonaten, -formiaten, -oxalaten, -sulfiden, -sulfiten, -bromiden, -iodiden, -fluoriden, -nitriden, -nitriten, -phosphaten, -phosphiden, -phosphiten und -acetaten,
mit
● Salzen, Hydroxiden, Alkoxiden oder Oxiden von Halbmetallen, Nichtmetallen oder Metallen, ausgewählt aus der Gruppe bestehend aus CO₂, CO, N₂O₃, N₂O₅, NO₂, NOₓ, Siliziumoxid, Aluminiumoxid, Telluroxid, Germaniumoxid, Antimonoxid, Galliumoxid, Vanadiumoxid, Manganoxid, Chromoxid, Titanoxid, Zirkoniumoxid, Ceroxid, Lanthanoxid, Cobaltoxid, Kupferoxid, Eisenoxid, Silberoxid, Wolframoxid und Zinkoxid,
gemischt und anschließend auf mindestens 400°C erhitzt werden, wobei die Salze, Hydroxide, Alkoxide oder Oxide von Alkali- oder Erdalkalimetallen im Molverhältnis 1:1 oder im Überschuß zu den Salzen, Hydroxiden, Alkoxiden oder Oxiden der Halbmetalle, Nichtmetalle oder Metalle vorliegen.

2. Verfahren gemäß Anspruch 1, **dadurch gekennzeichnet, daß** die Salze, Hydroxide, Alkoxide oder Oxide von Alkali- oder Erdalkaliverbindungen mit den Oxiden von Halbmetallen, Nichtmetallen oder Metallen in der Schmelze, in der Gasphase unter erhöhtem Druck oder als flüssiges Beschichtungsmaterial in einem Lösungsmittel, vorzugsweise in Wasser gemischt werden.

3. Verfahren gemäß Anspruch 1, **dadurch gekennzeichnet, daß** mindestens eines der Salze von Alkali- oder Erdalkalimetallen bzw. von Halbmetallen, Nichtmetallen oder Metallen als Oxid vorliegt, besonders bevorzugt die Halbmetalle, Nichtmetalle oder Metalle als Oxide vorliegen.

4. Verfahren gemäß Anspruch 1, **dadurch gekennzeichnet, daß** das Erhitzen bis zur Schmelztemperatur des höchstschmelzenden Bestandteiles erfolgt.

5. Verfahren gemäß Anspruch 1, **dadurch gekennzeichnet, daß** das Erhitzen während mindestens 1 Minute, vorzugsweise während mindestens 1 Stunde und besonders bevorzugt während mindestens 24 Stunden erfolgt.

6. Verfahren gemäß Anspruch 1, **dadurch gekennzeichnet, daß** das Erhitzen in sauerstofffreier Atmosphäre erfolgt.

7. Verfahren gemäß einem der Ansprüche 1 bis 6, **dadurch gekennzeichnet, daß** die Herstellung der Alkali- oder Erdalkalilegierungen als flüssiges Beschichtungsmaterial erfolgt.

8. Verfahren gemäß einem der Ansprüche 1 bis 7, **dadurch gekennzeichnet, daß** die Salze der Alkali- oder Erdalkaliverbindungen auf einen keramischen Festkörper, bestehend aus Salzen der Halbmetallen, Nichtmetallen oder Metallen aufgetragen werden und einer Temperaturbehandlung bei Temperaturen über 200°C unterzogen wird.

9. Verwendung der gemäß den Ansprüchen 1 bis 8 hergestellten Alkali- oder Erdalkalilegierungen als Beschichtungsmaterial.

10. Verwendung der gemäß den Ansprüchen 1 bis 8 hergestellten Alkali- oder Erdalkalilegierungen zum Herstellen von Beschichtungen in Verbrennungsmotoren und- maschinen für Motorinnenräume, Kolben, Abgasanlagen und -filter, auf Scheiben, Maschinenteilen, Rohren oder Kraftwerksteilen, in Kamininnenräumen und Brennkammern, als Entschlackungshilfe in Kraftwerken, auf Backofensichtscheiben, Grillgeräten, Haushaltsgeräten, Kochplatten, auf einem Träger zur Entfernung flüchtiger organischer Verbindungen aus der Raumluft oder zur Katalyse von chemischen Oxidationsprozessen für industrielle Anwendungen, in Brennstoffzellen zur Entfernung von gasförmigen Verunreinigungen des Wasserstoffes oder als Cokatalysator für die Energiegewinnung durch (photo-) katalytische Spaltung von Wasser in Wasserstoff und Sauerstoff.

## Claims

1. Method for producing alkali or alkaline earth alloys, **characterised in that**
● salts, hydroxides, alkoxides or oxides of alkali or alkaline earth compounds, selected from the group comprising alkali and/or alkaline earth sulphates, chlorides, nitrates, carbonates, formiates, oxalates, sulphides, sulphites, bromides, iodides, fluorides, nitrides, nitrites, phosphates, phosphides, phosphites and acetates
are mixed with
● salts, hydroxides, alkoxides or oxides of semi-metals, non-metals or metals, selected from the group comprising CO₂, CO, N₂O₃, N₂O₅, NO₂, NOₓ, silicon oxide, aluminium oxide, tellurium oxide, germanium oxide, antimony oxide, gallium oxide, vanadium oxide, manganese oxide, chromium oxide, titanium oxide, zirconium oxide, cerium oxide, lanthanum oxide, cobalt oxide, copper oxide, iron oxide, silver oxide, tungsten oxide and zinc oxide
and subsequently heated to at least 400 °C, the salts, hydroxides, alkoxides or oxides of alkali or alkaline earth metals being present in a molar ratio of 1:1 or in excess thereof in relation to the salts, hydroxides, alkoxides or oxides of the semi-metals, non-metals or metals.

2. Method according to claim 1, **characterised in that** the salts, hydroxides, alkoxides or oxides of alkali or alkaline earth compounds are mixed with the oxides of semi-metals, non-metals or metals in the fused state, in the gas phase under elevated pressure or as liquid coating material in a solvent, preferably in water.

3. Method according to claim 1, **characterised in that** at least one of the salts of alkali or alkaline earth metals or of semi-metals, non-metals or metals is present as an oxide, it being particularly preferable for the semi-metals, non-metals or metals to be present as oxides.

4. Method according to claim 1, **characterised in that** heating is effcted up to the melting temperature of the component with the highest melting point.

5. Method according to claim 1, **characterised in that** heating is effected for at least one minute, preferably for at least one hour and most preferably for at least 24 hours.

6. Method according to claim 1, **characterised in that** heating takes place in an oxygen-free atmosphere.

7. Method according to one of the claims 1 to 6, **characterised in that** the alkali or alkaline earth alloys are produced as liquid coating material.

8. Method according to one of the claims 1 to 7, **characterised in that** the salts of the alkali or alkaline earth compounds are applied to a solid ceramic body consisting of salts of semi-metals, non-metals or metals and subjected to heat treatment at temperatures above 200 °C.

9. Use of the alkali or alkaline earth alloys produced according to the claims 1 to 8 as coating material.

10. Use of the alkali or alkaline earth alloys prepared according to the claims 1 to 8 for the production of coatings on the engine interiors, pistons, exhaust-gas systems and exhaust-gas filters of internal combustion engines, on panes, machine parts, pipes or power-plant components, in chimney interiors and combustion chambers, as deslagging agents in power plants, on see-through oven doors, grilling devices, household appliances and hotplates, on a carrier to remove volatile organic compounds from indoor ambient air or for catalysing chemical oxidation processes in industrial applications, in fuel cells to remove gaseous impurities in the hydrogen, or as co-catalyst for generating energy by (photo)catalytic splitting of water into hydrogen and oxygen.

## Revendications

1. Procédé de préparation d'alliages d'alcalins ou d'alcalinoterreux **caractérisé en ce que** l'on mélange
● des sels, des hydroxydes, des alcoolates ou des oxydes de composés alcalins ou alcalino-terreux, choisis dans le groupe composé de sulfates alcalins ou alcalino-terreux, de chlorures alcalins ou alcalino-terreux, de nitrates alcalins ou alcalino-terreux, de carbonates alcalins ou alcalino-terreux, de formiates alcalins ou alcalino-terreux, d'oxalates alcalins ou alcalino-terreux, de sulfures alcalins ou alcalino-terreux, de sulfites alcalins ou alcalino-terreux, de bromures alcalins ou alcalino-terreux, d'iodures alcalins ou alcalino-terreux, de fluorures alcalins ou alcalino-terreux, de nitrures alcalins ou alcalino-terreux, de nitrites alcalins ou alcalino-terreux, de phosphates alcalins ou alcalino-terreux, de phosphures alcalins ou alcalino-terreux, des phosphites alcalins ou alcalino-terreux et des acétates alcalins ou alcalino-terreux,
avec
● des sels, des hydroxydes, des alcoolates ou des oxydes de métalloïdes, de non-métaux ou de métaux choisis dans le groupe composé de CO₂, CO, N₂O₃, N₂O₅, NO₂, NOₓ, l'oxyde de silicium, l'oxyde d'aluminium, l'oxyde de tellure, l'oxyde de germanium, l'oxyde d'antimoine, l'oxyde de gallium, l'oxyde de vanadium, l'oxyde de manganèse, l'oxyde de chrome, l'oxyde de titane, l'oxyde de zirconium, l'oxyde de cérium, l'oxyde de lanthane, l'oxyde de cobalt, l'oxyde de cuivre, l'oxyde de fer, l'oxyde d'argent, l'oxyde de wolfram ou l'oxyde de zinc,
puis on chauffe à au moins 400 °C, les sels, les hydroxydes, les alcoolates ou les oxydes des métaux alcalins ou alcalinoterreux étant présents dans un rapport molaire de 1:1 ou en excès par rapport aux sels, aux hydroxydes, aux alcoolates ou aux oxydes de métalloïdes, de non-métaux ou de métaux.

2. Procédé selon la revendication 1, **caractérisé en ce que** les sels, les hydroxydes, les alcoolates ou les oxydes de composés alcalins ou alcalinoterreux sont mélangés aux oxydes de métalloïdes, de non-métaux ou de métaux dans la masse fondue, en phase gazeuse sous haute pression ou comme matériau de revêtement dans un solvant, de préférence dans de l'eau.

3. Procédé selon la revendication 1, **caractérisé en ce qu**'au moins un des sels de métaux alcalins ou alcalino-terreux, ou de métalloïdes, de non-métaux ou de métaux est présent sous forme d'oxyde, de préférence les métalloïdes, les non-métaux ou les métaux sont présents sous forme d'oxydes.

4. Procédé selon la revendication 1, **caractérisé en ce que** le chauffage se fait jusqu'à la température de fusion du composant ayant la plus haute température de fusion.

5. Procédé selon la revendication 1, **caractérisé en ce que** le chauffage se fait durant au moins une minute, de préférence durant au moins une heure, et de façon privilégiée durant au moins 24 heures.

6. Procédé selon la revendication 1, **caractérisé en ce que** le chauffage se fait sous une atmosphère exempte d'oxygène.

7. Procédé selon l'une des revendications 1 à 6, **caractérisé en ce que** la préparation des alliages alcalins ou alcalino-terreux est réalisée sous forme de matériau de revêtement.

8. Procédé selon l'une des revendications 1 à 7, **caractérisé en ce que** les sels des composés alcalins ou alcalino-terreux sont appliqués sur un corps solide céramique, composé de sels des métalloïdes, des non-métaux ou des métaux, et sont soumis à un traitement thermique à une température supérieure à 200 °C.

9. Utilisation des alliages alcalins ou alcalino-terreux préparés selon les revendications 1 à 8 comme matériau de revêtement.

10. Utilisation des alliages alcalins ou alcalino-terreux préparés selon les revendications 1 à 8 pour la préparation de revêtements dans les moteurs thermiques ou des machines thermiques, pour le compartiment moteur, des pistons, des installations d'échappement et des filtres d'échappement, sur des vitres, des parties de machine, des tubes ou des pièces de centrales thermiques, dans les foyers de cheminée et les chambres de combustion, comme moyens de décrassage dans les centrales thermiques, sur les vitres de fours de cuisson, les appareils pour grillades, les appareils ménagers, les plaques de cuisson, sur un support pour l'élimination de composés organiques volatils de l'air ambiant ou pour la catalyse de procédés chimiques d'oxydation pour des utilisations industrielles, dans les cellules de combustible pour éliminer des impuretés gazeuses de l'hydrogène ou comme catalyseur pour la production d'énergie pour la dissociation (photo-)catalytique de l'eau en hydrogène et oxygène.
